# EUROPEAN PATENT APPLICATION

(11) **EP 4 723 299 A1**
(43) Date of publication of application: **08.04.2026**
(21) Application number: 25202205.8
(22) Date of filing: 15.09.2025
(51) Int. Cl.: H01M 10/613, H01M 10/615, H01M 10/6557, H01M 10/6571, H01M 10/643

(54) **BATTERY ASSEMBLY AND BATTERY PACK**

(30) Priority: 25.09.2024 CN 202422351305 U; 06.11.2024 WO PCT/CN2024/130304
(71) Applicant: Eve Energy Co., Ltd., Huizhou, Guangdong 516006 (CN)
(72) Inventor: HUANG, Liansheng, Huizhou, 516006 (CN); YAN, Shiwei, Huizhou, 516006 (CN); QIN, Bo, Huizhou, 516006 (CN); ZHAO, Yuhang, Huizhou, 516006 (CN); LI, Xingyao, Huizhou, 516006 (CN)
(74) Representative: Studio Torta S.p.A.

(57) **Abstract**

Disclosed in the present disclosure is a battery assembly, including: a battery row unit (1) having a plurality of arranged battery cells; a heat exchange element (2) extending along a first direction, where the first direction is an arrangement direction of the plurality of battery cells (11), and the heat exchange element (2) is configured to cool each battery cell (11); and a heating element (3) mounted on the heat exchange element (2), in close contact with each battery cell (11) and configured to heat each battery cell (11). Meanwhile, further disclosed is a battery pack using the battery assembly, which achieves the purpose of quickly adjusting the battery cells (11) within an optimal temperature range on the premise of a simplified structure.

## Description

### FIELD OF TECHNOLOGY

The present disclosure relates to the field of batteries, in particular to a battery assembly and a battery pack.

### BACKGROUND

During charging and discharging of power batteries, a large amount of heat is usually generated. In order not to affect the overall performance of power batteries, cooling technology is a very important part, with a core objective of temperature management for power batteries.

### SUMMARY

### Technical problems

Relevant cooling technologies mostly adopt air cooling and liquid cooling methods to control the temperature of power batteries. Air cooling achieves heat dissipation by means of forced air convection heat transfer. Due to the defects such as low thermal conductivity and small heat capacity of air, the air cooling has a poor cooling effect. Consequently, it has been gradually phased out in new energy vehicles. In contrast, liquid cooling technology achieves uniform heat dissipation by means of liquid circulation, which is suitable for scenarios of long-term operation and precise temperature control and has high safety. However, a liquid cooling system is complex in overall structure, requires a large number of components, and has high costs, making it difficult to meet the increasingly stringent demand for cost reduction.

### Technical solutions

In a first aspect, the present disclosure provides a battery assembly, including: a battery row unit having a plurality of arranged battery cells; a heat exchange element extending along a first direction, where the first direction is an arrangement direction of the plurality of battery cells, and the heat exchange element is configured to cool each of the battery cells; and a heating element mounted on the heat exchange element, in close contact with each of the battery cells and configured to heat each of the battery cells.

In a second aspect, the present disclosure provides a battery pack, including the above battery assembly.

### Beneficial effects

The battery assembly and the battery pack provided in the present disclosure have the following technical effects:

The battery cells can be directly cooled with a coolant by using the heat exchange elements and can be directly heated by using the heating elements. This not only effectively improves the heat exchange efficiency of the battery cells, enabling the battery cells to be quickly adjusted within an optimal temperature range under high-temperature or low-temperature working conditions, but also maintains the battery cells at the best usage performance. Moreover, the overall structure is simple, and the assembly is convenient. Thus, the problems of complex structure, a large number of components, and high costs due to the relevant use of a liquid cooling system are effectively solved.

### BRIEF DESCRIPTION OF THE DRAWINGS

FIG. 1 is an overall assembly structure diagram of a battery assembly in the present disclosure;
FIG. 2 is a first partial assembly diagram of a battery assembly in the present disclosure;
FIG. 3 is a second partial assembly diagram of a battery assembly in the present disclosure;
FIG. 4 is a third partial assembly diagram of a battery assembly in the present disclosure;
FIG. 5 is a fourth partial assembly diagram of a battery assembly in the present disclosure; and
FIG. 6 is a schematic diagram of an overall structure of a cooling assembly in the present disclosure.

Reference signs: 1-battery row unit, 11-battery cell, 2-heat exchange element, 21-heat exchange station, 22-input terminal, 23-output terminal, 24-heat exchange element body, 3-heating element, 31-heating unit, 32-conductive unit, 4-cooling assembly, 41-input plug connector, 42-output plug connector, 43-external input tube, 44-external output tube, 5-heating assembly, 51-conductive connector, 52-plug-in conductive head, and 53-connector terminal.

### DESCRIPTION OF THE EMBODIMENTS

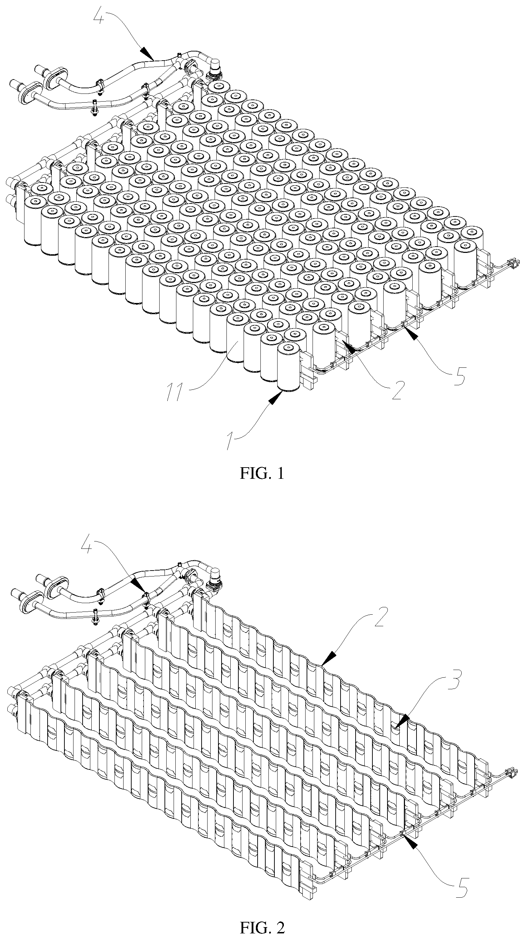

Specifically, as shown in FIG. 1 and FIG. 2, the present disclosure discloses a battery assembly, including a battery row unit 1, a heat exchange element 2, and a cooling assembly 4. The battery row unit 1 is provided with a plurality of arranged battery cells 11. The battery cells 11 herein are preferably cylindrical cells. Certainly, the battery cells 11 are also optionally square cells. Each battery cell 11 has a positive electrode end surface, a negative electrode end surface, and a peripheral curved surface located between the positive electrode end surface and the negative electrode end surface. The positive electrode end surface is a side surface of the battery cell 11 where a positive electrode current collector is disposed, and the negative electrode end surface is a side surface of the battery cell 11 where a negative electrode current collector is disposed. Both the positive electrode end surface and the negative electrode end surface are connected to the peripheral curved surface. A height direction H of the battery cell 11 is a direction in which the battery cell 11 extends from the negative electrode end surface along its central axis towards the positive electrode end surface.

Optionally, specifically as shown in FIG. 1 to FIG. 4, the heat exchange element 2 extends along a first direction that is an arrangement direction of the plurality of battery cells 11. Specifically, the heat exchange element 2 includes a heat exchange element body 24 extending along the first direction. A fluid channel for a coolant to flow through is formed inside the heat exchange body 24. The heat exchange element body 24 is further provided with a heat exchange wall for contacting the peripheral curved surface of the battery cell 11. When the battery cell 11 is in a charging or discharging state for a long time, or when the battery cell 11 triggers thermal runaway, the battery cell 11 has a high temperature, so that a temperature difference is formed between the coolant and the battery cell 11, and a large amount of heat will be conducted from the high-temperature peripheral curved surface to the low-temperature heat exchange wall, enabling the battery cell 11 to exchange heat with the coolant in the fluid channel through the heat exchange wall. Ultimately, the coolant carries a large amount of heat out of the heat exchange element body 24, achieving heat dissipation for the battery cell 11.

In this embodiment, the fluid channel extends back and forth in a meandering manner along the height direction H of the battery cell 11. That is, the fluid channel includes a plurality of horizontal flow channels distributed side by side and independently disposed along the height direction H of the battery cell 11, and a transition flow channel that achieves end-to-end communication between two adjacent horizontal flow channels. The "independently disposed" herein refers to that the coolant in each horizontal flow channel does not interfere with the coolant in other horizontal flow channels, allowing the coolant to maintain a stable flow in the corresponding horizontal flow channel. An extension direction of each fluid channel is consistent with the first direction.

In this way, after flowing into the fluid channel, the coolant not only cools a plurality of battery cells 11 of the battery row unit 1 one by one along the first direction, but also can flow in a meandering manner from top to bottom or from bottom to top along the height direction H of the battery cell 11. It is equivalent to the coolant flowing in a meandering manner from bottom to top or from top to bottom along the height direction H of the battery cell 11, so that the time for heat exchange between the coolant and the battery cell 11 is greatly prolonged, thereby effectively improving the utilization of the coolant.

In addition, specifically as shown in FIG. 2, FIG. 3, and FIG. 4, in order to increase a contact area between the peripheral curved surface of the battery cell 11 and the heat exchange wall of the heat exchange element body 24, a large amount of heat released by the battery cell 11 can be more timely, efficiently and rapidly conducted into the coolant in the fluid channel. A plurality of heat exchange stations 21 are formed on the heat exchange element body 24 of the heat exchange element 2. The plurality of heat exchange stations 21 are evenly arranged along the first direction. Each heat exchange station 21 is adapted in shape and size to each battery cell 11. That is, each heat exchange station 21 is in the shape of an arc-shaped groove adapted to the battery cell 11. Further optionally, the heat exchange element 2 has a serpentine tubular structure. At this time, a serpentine corrugated concave surface of the heat exchange element 2 forms the heat exchange station 21. That is, the heat exchange station 21 in the shape of an arc-shaped groove is the serpentine corrugated concave surface of the heat exchange element 2. Each battery cell 11 is embedded in the corresponding heat exchange station 21, thus greatly improving the heat dissipation efficiency of the battery cell 11.

In this way, the cooperation among direct cooling of the coolant, the heat exchange station 21, and the fluid channel extending back and forth in a meandering manner enables heat in an environment where the battery assembly is located and a large amount of heat released by the battery cell 11 to be quickly absorbed and timely discharged. Compared with liquid cooling and air cooling methods, the heat exchange efficiency is higher, and the usage performance, service life and use safety of the battery cell 11 can be effectively ensured.

Optionally, specifically as shown in FIG. 1, FIG. 2, FIG. 3, FIG. 4, and FIG. 6, the heat exchange element 2 has an input terminal 22 and an output terminal 23, where the input terminal 22 communicates with one end of the fluid channel, and the output terminal 23 communicates with the other end of the fluid channel. The above cooling assembly 4 includes an input plug connector 41, an output plug connector 42, an external input tube 43, and an external output tube 44, where the external input tube 43 is connected to the input plug connector 41, the external output tube 44 is connected to the output plug connector 42, the input plug connector 41 is fixedly connected to the input terminal 22 of the heat exchange element 2, and the output plug connector 42 is fixedly connected to the output terminal 23 of the heat exchange element 2, achieving the purpose of connecting the cooling assembly 4 to the heat exchange element 2.

In this way, the external coolant will flow through the input plug connector 41 under the guidance of the external input tube 43 of the cooling assembly 4 and then be input to the fluid channel. After carrying a large amount of heat released by each battery cell 11, the coolant flows through the output plug connector 42 and is transported to the external output tube 44 of the cooling assembly 4. Under the action of the external output tube 44, the coolant is guided out of the battery assembly, achieving the purpose that the cooling assembly 4 cooperates with the heat exchange element 2 to exchange heat with each battery cell 11. The structure is simple, and a flow path of the coolant is clear and concise, which is convenient for subsequent maintenance and check.

Optionally, the input plug connector 41 and/or the output plug connector 42 is an SAE quick plug connector. On the one hand, the SAE quick connector is a mature tube connector that complies with the same standards, which can reduce the cost of replacing components. Meanwhile, the input plug connector 41 is detachably connected to the input terminal 22 of the heat exchange element 2, and the output plug connector 42 is detachably connected to the output terminal 23 of the heat exchange element 2. This reduces the difficulty of disassembly and assembly, and is beneficial for subsequent replacement, thus greatly reducing the maintenance cost.

It should be noted that the battery row unit 1 is optionally disposed on each of two opposite sides of the heat exchange element 2. This is beneficial for further improving the heat exchange efficiency of the heat exchange element 2 and the battery assembly. Meanwhile, the utilization of the coolant can also be improved.

As a core solution of this embodiment, specifically as shown in FIG. 2, the battery assembly further includes a heating element 3 and a heating assembly 5, where the heating element 3 is mounted on the heat exchange element 2, the heating element 3 is in close contact with each battery cell 11, and the heating assembly 5 is connected to the heating element 3. When a temperature of the environment where the battery cell 11 is located decreases, the heating assembly 5 cooperates with the heating element 3 to provide heat to each battery cell 11, so that the battery cell 11 can still be within a relatively suitable usage temperature range and maintain the best usage state and performance.

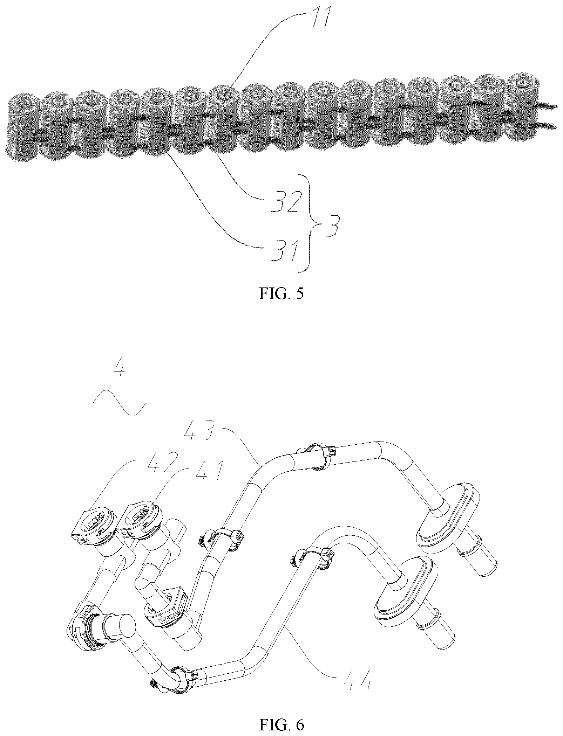

Specifically, as shown in FIG. 5, the above heating element 3 includes a plurality of heating units 31 and a conductive unit 32 fixedly connected between two adjacent heating units 31, where the plurality of heating units 31 are connected in series through the conductive units 32, and each heating unit 31 is in close contact with the corresponding battery cell 11. In a power-on state, the heating unit 31 converts electrical energy into heat energy, and the released heat energy is conducted to the battery cell 11, thereby adjusting and restoring a temperature of each battery cell 11 within an appropriate temperature range.

As an optional implementation of this embodiment, specifically as shown in FIG. 5, the above heating unit 31 is an electric heating wire or a heating tube, and the heating unit 31 extends back and forth in a meandering manner along the height direction H of the battery cell 11, enabling the heating unit 31 to uniformly supply heat to the peripheral curved surface of the battery cell 11. The conductive unit 32 includes a first conductor and a second conductor opposite to each other, where the first conductor is fixedly connected to an end part of one end of the heating unit 31 or a position close to the end part of one end, and the second conductor is fixedly connected to an end part of the other end of the heating unit 31 or a position close to the end part of the other end. The "fixedly connected" herein is optionally "a welded connection", and certainly, it is also optionally "integrally formed".

In other words, the heating element 3 itself can generate heat to heat the battery cell 11. At this time, the heating assembly 5 functions to provide electrical energy.

In other preferred embodiments, the heating element 3 may also be a thermally conductive structure, and the heating assembly 5 is a structure that generates heat. For example, the heating assembly 5 provides a hot fluid, and the hot fluid heats the battery cell 11 through the heating element 3.

Optionally, each heating unit 31 is disposed in the corresponding heat exchange station 21, so that when the battery cell 11 is embedded in the heat exchange station 21, the heating unit 31 is sandwiched and fixed between the battery cell 11 and the heat exchange station 21. To improve the mounting stability of the heating unit 31, a thermally conductive adhesive member is disposed between the battery cell 11 and the heating unit 31.

In this way, the heating unit 31 is stably adhered to the peripheral curved surface of the battery cell 11 by using the thermally conductive adhesive member, and it is beneficial for more evenly spreading heat released by the heating unit 31 to the peripheral curved surface of the battery cell 11, improving the heating uniformity and efficiency, ensuring that the peripheral curved surface of the battery cell 11 can be stably in close contact with the heat exchange station 21, and ensuring that the heat released by the battery cell 11 can be stably conducted to the coolant.

In addition, the battery assembly further includes a foam adhesive filled between two adjacent battery cells 11 and coating at least part of the battery cells 11, making the overall assembly of the battery assembly more firm and compact. Meanwhile, the risk of dry burning of the heating unit 31 can also be effectively prevented.

Optionally, specifically as shown in FIG. 2 and FIG. 5, the heat exchange element 2 has a serpentine tubular structure, the heating element 3 has a film-like structure, and the heating element 3 is cooperatively disposed on a side surface of the heat exchange element 2. Further optionally, the heating element 3 is adhered to the side surface of the heat exchange element 2, and the heating element 3 is bent in a serpentine shape together with the heat exchange element 2, where serpentine corrugated concave surfaces of the heat exchange element 2 form the heat exchange stations 21, the heating units 31 are disposed in the serpentine corrugated concave surfaces of the heat exchange element 2, and the conductive unit 32 spans across serpentine corrugated convex surfaces of the heat exchange element 2 to connect two adjacent heating units 31. In this way, it can be very effectively ensured that the heating unit 31 is stably attached to the serpentine corrugated concave surface of the heat exchange element 2, and the heating unit 31 can be effectively in contact with the battery cell 11, so that a maximum heating rate of the entire battery assembly is well ensured.

It is to be noted that the heating element 3 may also be disposed on the side surface of the heat exchange element 2 by other means of snap connection, plug connection, and the like. The means of mounting the heating element 3 are not limited herein.

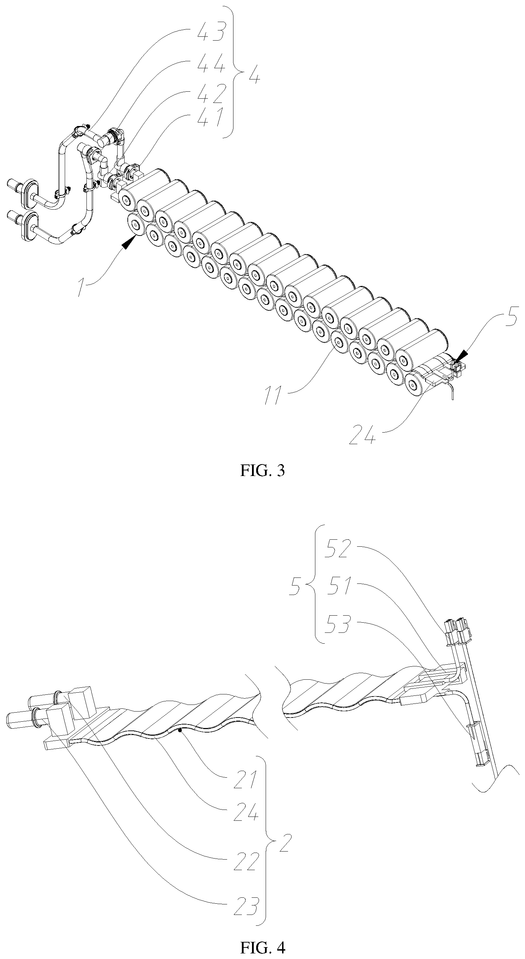

As an optional implementation of this embodiment, specifically as shown in FIG. 1 to FIG. 4, the above heating assembly 5 includes a conductive connector 51 and a plug-in conductive head 52 electrically connected to the conductive connector 51, where the conductive connector 51 is disposed at an end part of the heat exchange element 2. As shown in FIG. 4, the conductive connector 51 optionally has a U-shaped structure. The conductive connector 51 can be in plug fit with an end part of the heat exchange element body 24, so that the conductive connector 51 can be stably mounted and fixed, avoiding the risk of a short circuit. In addition to the means of plug fit, the conductive connector 51 may also be connected to the end part of the heat exchange element body 24 by means of snap connection, or the conductive connector 51 can be adhered to the end part of the heat exchange element body 24, or the conductive connector 51 can be fixed to the end part of the heat exchange element body 24 by a fastener. The conductive connector 51 is electrically connected to the heating unit 31.

It can be understood that the plug-in conductive head 52 includes a positive electrode conductive head and a negative electrode conductive head that are both electrically connected to a relay that is used to control an on-off state of a circuit where the heating assembly 5 is located.

In this embodiment, there may be at least the following two arrangement solutions for the battery row unit 1, the heat exchange element 2, and the heating element 3:
(1) the heat exchange element 2 and the heating element 3 are arranged only on one side of the battery row unit 1; and
(2) the heat exchange element 2 and the heating element 3 are arranged on each of two opposite sides of the battery row unit 1.

As a specific example of the above solution (1), specifically as shown in FIG. 1 and FIG. 2, the battery assembly includes a plurality of battery row units 1 disposed side by side, a plurality of heat exchange elements 2, and a plurality of heating elements 3, where the number of the battery row units 1 is equal to the number of the heating elements 3, the number of the battery row units 1 is twice the number of the heat exchange elements 2, and one heating element 3 and one battery row unit 1 are arranged on each of two opposite sides of each heat exchange element 2. Referring to FIG. 3, that is to say, two adjacent battery row units 1 disposed side by side form a battery module, each battery module is equipped with one heat exchange element 2 and two heating elements 3, the heat exchange element 2 is sandwiched between two adjacent battery row units 1 disposed side by side, and two adjacent heat exchange elements 2 are distributed at an interval of two rows of battery row units 1, so that a density of the battery assembly can be effectively increased.

As a specific example of the above solution (2), the battery assembly includes a plurality of battery row units 1 disposed side by side, a plurality of heat exchange elements 2, and a plurality of heating elements 3, where the number of the heating elements 3 is twice the number of the battery row units 1, the number of the heat exchange elements 2 is one more than the number of the battery row units 1, the heat exchange elements 2 and the battery row units 1 are arranged alternately in sequence, and one heating element 3 is arranged on each of two opposite sides of each battery row unit 1. That is to say, in the battery assembly, two heat exchange elements 2 are located on outermost sides, the heating elements 3 and the battery row units 1 are arranged only in the heat exchange elements 2 located on the outermost sides, and the heating element 3 is arranged on each of two opposite sides of other heat exchange elements 2, so that every two adjacent battery row units 1 disposed side by side are each equipped with one heat exchange element 2. In this way, a region where heat accumulates in a middle of the battery assembly can be fully adjusted, so as to better ensure that each battery cell 11 can be adjusted more timely and efficiently.

Based on the aforementioned a plurality of heat exchange elements 2, optionally, the cooling assembly 4 connects the plurality of heat exchange elements 2 in parallel. At this time, in the cooling assembly 4, a plurality of input plug connectors 41 and a plurality of output plug connectors 42 are also disposed, where all the input plug connectors 41 are connected to the external input tube 43, all the output plug connectors 42 are connected to the external output tube 44, each input plug connector 41 is fixedly connected to the input terminal 22 of a heat exchange element 2, and a first output plug connector 42 is fixedly connected to the output terminal 23 of a heat exchange element 2. In other preferred embodiments, the cooling assembly 4 may also connect the plurality of heat exchange elements 2 in series. At this time, two adjacent heat exchange elements 2 may be connected in series through an intermediate tube, the input plug connector 41 is connected to the input terminal 22 of the heat exchange element 2 on one outer side, and the output plug connector 42 is connected to the input terminal 22 of the heat exchange element 2 on the other outer side.

Based on the aforementioned a plurality of heating elements 3, optionally, the heating assembly 5 connects the plurality of heating elements 3 in series. At this time, two adjacent heating elements 3 are connected in series through a connector terminal 53, the positive electrode conductive head of the plug-in conductive head 52 is electrically connected to the conductive connector 51 on the heating element 3 on one outer side, and the negative electrode conductive head of the plug-in conductive head 52 is electrically connected to the conductive connector 51 on the heating element 3 on the other side. In other preferred embodiments, the heating assembly 5 may also connect a plurality of heating elements 3 in parallel by correspondingly changing wiring of electrical connection, which is not elaborated herein.

Based on the structure and connection relationship of the above battery assembly, the applicant further discloses a battery pack, including the above battery assembly.

## Claims

1. A battery assembly, comprising:
a battery row unit (1), wherein the battery row unit (1) is provided with a plurality of arranged battery cells (11);
a heat exchange element (2), wherein the heat exchange element (2) extends along a first direction that is an arrangement direction of the plurality of battery cells (11), and the heat exchange element (2) is configured to cool each of the battery cells (11); and
a heating element (3), wherein the heating element (3) is mounted on the heat exchange element (2), the heating element (3) is in close contact with each of the battery cells (11), and the heating element (3) is configured to heat each of the battery cell (11).

2. The battery assembly according to claim 1, wherein the heating element (3) comprises a plurality of heating units (31) and a conductive unit (32) fixedly connected between two adjacent heating units (31), and each of the heating units (31) is in close contact with a corresponding one of the battery cells (11).

3. The battery assembly according to claim 2, wherein the heating units (31) are electric heating wires or heating tubes, and the heating units (31) extend back and forth in a meandering manner along a height direction H of the battery cells (11).

4. The battery assembly according to claim 2, wherein the battery cells (11) are cylindrical cells, a plurality of heat exchange stations (21) are formed on the heat exchange element (2), each of the heat exchange stations (21) is adapted in shape and size to each of the battery cells (11), each of the battery cells (11) is embedded in a corresponding one of the heat exchange stations (21), and each of the heat exchange stations (21) is equipped with the heating unit (31).

5. The battery assembly according to claim 4, wherein the heat exchange element (2) has a serpentine tubular structure, the heating element (3) has a film-like structure, and the heating element (3) is cooperatively disposed on a side surface of the heat exchange element (2).

6. The battery assembly according to claim 5, wherein the heating element (3) is adhered to the side surface of the heat exchange element (2), wherein serpentine corrugated concave surfaces of the heat exchange element (2) form the heat exchange stations (21), the heating units (31) are disposed in the serpentine corrugated concave surfaces of the heat exchange element (2), and the conductive unit (32) spans across serpentine corrugated convex surfaces of the heat exchange element (2) to connect two adjacent heating units (31).

7. The battery assembly according to any one of claims 2 to 6, wherein thermally conductive adhesive members are disposed between the battery cells (11) and the heating units (31).

8. The battery assembly according to any one of claims 1 to 6, wherein the heat exchange element (2) and the heating element (3) are arranged on at least one side of the battery row unit (1).

9. The battery assembly according to claim 8, wherein the battery assembly comprises the plurality of battery row units (1) disposed side by side, the plurality of heat exchange elements (2), and the plurality of heating elements (3), wherein the number of the battery row units (1) is equal to the number of the heating elements (3), the number of the battery row units (1) is twice the number of the heat exchange elements (2), and one of the heating elements (3) and one of the battery row units (1) are arranged on each of two opposite sides of each of the heat exchange elements (2).

10. The battery assembly according to claim 8, wherein the battery assembly comprises the plurality of battery row units (1) disposed side by side, the plurality of heat exchange elements (2), and the plurality of heating elements (3), wherein the number of the heating elements (3) is twice the number of the battery row units (1), the number of the heat exchange elements (2) is one more than the number of the battery row units (1), the heat exchange elements (2) and the battery row units (1) are arranged alternately in sequence, and one of the heating elements (3) is arranged on each of two opposite sides of each of the battery row units (1).

11. The battery assembly according to claim 9 or 10, wherein the battery assembly further comprises a cooling assembly (4) and a heating assembly (5), wherein the plurality of heat exchange elements (2) are all connected to the cooling assembly (4), and the plurality of heating elements (3) are all connected to the heating assembly (5).

12. The battery assembly according to any one of claims 1 to 6, the battery assembly further comprises a foam adhesive filled between two adjacent battery cells (11) and coating at least part of the battery cells (11).

13. The battery assembly according to claim 5, wherein the heating element (3) is disposed on the side surface of the heat exchange element (2) by other means of snap connection, plug connection.

14. The battery assembly according to claim 11, wherein the heating assembly (5) includes a conductive connector (51) and a plug-in conductive head (52) electrically connected to the conductive connector (51), wherein the conductive connector wherein is disposed at an end part of the heat exchange element (2).

15. A battery pack, comprising the battery assembly according to any one of claims 1 to 14.
